# EUROPÄISCHE PATENTSCHRIFT

(11) **EP 1 449 632 B1**
(45) Veröffentlichungstag und Bekanntmachung des Hinweises auf die Patenterteilung: **12.03.2008**
(21) Anmeldenummer: 04001863.2
(22) Anmeldetag: 29.01.2004
(51) Int. Cl.: B29C 45/37, C09J 7/00, F16J 15/02

(54) **Scheibenförmiger Körper aus thermoplastischem Kunststoff und Verfahren zu seiner Herstellung**
Disk from thermoplastic resin and manufacturing process therefore
Disque en matière thermoplastique et son procédé de préparation

(30) Priorität: 19.02.2003 DE 10307108
(43) Veröffentlichungstag der Anmeldung: 25.08.2004
(73) Patentinhaber: Newfrey LLC, Newark, Delaware 19711 (US)
(72) Erfinder: Schäty, Harald, 35578 Wetzlar (DE)
(74) Vertreter: Haar, Lucas Heinz Jörn

(56) Entgegenhaltungen:
- EP-A- 0 504 957
- EP-A- 0 707 054
- PATENT ABSTRACTS OF JAPAN Bd. 2000, Nr. 25, 12. April 2001 (2001-04-12) & JP 2001 220183 A (SEKISUI CHEM CO LTD), 14. August 2001 (2001-08-14)

## Beschreibung

Die Erfindung betrifft einen scheibenförmigen Körper aus thermoplastischem Kunststoff, insbesondere thermoplastischem Klebstoff, als Zwischenlage zum Abdichten oder Befestigen von Stopfen oder Befestigungselementen an einem Bauteil, wobei auf entgegengesetzten Seiten des Körpers Anlageflächen ausgebildet sind. Die Erfindung betrifft außerdem ein Verfahren zur Herstellung eines derartigen, scheibenförmigen Körpers, bei welchem der Kunststoff in plastifiziertem Zustand mit Druck in ein gekühltes Formwerkzeug gespritzt und nach einer Abkühlphase aus diesem entnommen wird.

Scheibenförmige Körper der angegebenen Art werden beispielsweise als Zwischenlage zwischen Bauteilen verwendet, um diese gegeneinander abzudichten und/oder klebend miteinander zu verbinden. Anwendungsbeispiele solcher Art sind aus GB 2 067 253 A und EP 0 504 957 A2 bekannt. Bei diesen Anwendungen wird der scheibenförmige Körper zwischen den miteinander zu verbindenden Bauteilen angeordnet und anschließend durch Erwärmen in einen fließfähigen Zustand gebracht, wodurch er die beiden Bauteile adhäsiv miteinander verbindet und gegebenenfalls in Spalte zwischen den Bauteilen eindringt, um diese dicht zu verschließen.

Aus JP-A-2001220183 ist eine thermoplastische PVAc-Folie zum Verbinden von zwei Glasscheibe bekannt. Die Folie hat eine Oberflächenrauhigkeit von 30 bis 100 µm und soll gute Eigenschaften in Hinsicht auf Transparenz, Wetterbeständigkeit, Absorption von Stoßenergie, Haftung an Glass und Schallisolation haben.

Bei der Herstellung und Montage scheibenförmiger Körper der angegebenen Art sind verschiedene Probleme aufgetreten. Die Körper ließen sich schlecht aus der Vertiefung des Formwerkzeuges entnehmen. Insbesondere ringförmig gestaltete Körper zeigten außerdem ein starkes, undefiniertes Verzugs- und Schwindungsverhalten, so daß die vorgeschriebenen Abmessungen nicht zuverlässig erreicht werden konnten. Weiterhin neigten die einzelnen Körper beim Transport als Schüttgut dazu, aneinander zu haften, wodurch das Vereinzeln insbesondere bei automatischer Montage erheblich erschwert wurde. Ein Versuch mit einer geeigneten Flüssigkeit als Trennmittel, das verhindern soll, daß die einzelnen Körper miteinander verkleben, erbrachte kein zufriedenstellendes Ergebnis.

Von dieser Problemstellung ausgehend, liegt der Erfindung die Aufgabe zugrunde, scheibenförmige Körper der eingangs genannten Art derart auszubilden, daß sie sich leicht vereinzeln und montieren lassen. Weiterhin ist es Aufgabe der Erfindung, das

Herstellverfahren hinsichtlich des Verzugs- und Schwindungsverhaltens der Körper und hinsichtlich der Entformbarkeit zu verbessern.

Diese Aufgabe wird durch eine Gestaltung des scheibenförmigen Körpers mit den in Anspruch 1 angegebenen Merkmalen sowie durch ein Verfahren in den in Anspruch 5 angegebenen Merkmalen gelöst.

Nach der Erfindung sind die auf entgegengesetzten Seiten vorgesehenen Anlageflächen des scheibenförmigen Körpers aus thermoplastischem Kunststoff außergewöhnlich rauh. Überraschenderweise wurde gefunden, daß bei einer derart rauhen Beschaffenheit der Anlageflächen aneinanderliegende Körper nicht mehr die Neigung haben, aneinander zu haften, sondern sich leicht voneinander trennen und vereinzeln lassen. Zusätzliche Trennmittel sind nicht erforderlich. Maschinelle Einrichtungen zur automatischen Vereinzelung und Montage können mit den erfindungsgemäß gestalteten Körpern daher störungsfrei betrieben werden.

Nach dem erfindungsgemäßen Verfahren, wird die geeignete Rauheit der Anlageflächen bei der Formgebung des Körpers erzeugt, indem die Formflächen des Formwerkzeugs, welche die Anlageflächen bilden, mit einer den Anlageflächen entsprechenden Rauheit versehen sind. Hierbei hat sich als vorteilhaft erwiesen, daß durch die von der üblichen Gestaltung abweichende Rauheit der Formflächen des Formwerkzeuges der scheibenförmige Körper während der Abkühlphase in dem Formwerkzeug besser festgehalten wird und nachteilige Schwindungs- und Verzugserscheinungen dadurch vermieden werden können. Weiterhin wurde gefunden, daß durch Öffnen des Formwerkzeuges vor der vollständigen Abkühlung die dann noch eintretende geringfügige Restschwindung aufgrund der rauhen Formflächen des Formwerkzeuges die Trennung von Körper und Formwerkzeug begünstigt und das Entformen und Auswerfen des Körpers aus dem Formwerkzeug erheblich erleichtert. Durch den Entformungsvorgang verursachte Verformungen des Körpers werden auf diese Weise vermieden.

Nach der Erfindung ist sowohl für das Vereinzeln als auch für den Herstellprozeß besonders geeignet eine gemittelte Rauhtiefe R_{z} nach DIN 4768 der entsprechenden Oberflächen des Körpers und des Formwerkzeuges von 40 bis 100 µm Vorzugsweise liegt die gemittelte Rauhtiefe jedoch im Bereich von 55 bis 70 µm. Die Rauhtiefe kann bei den Oberflächen des Formwerkzeuges vorteilhaft mit Hilfe von Funkenerosion hergestellt werden. Geeignete arithmetische Mittenrauhwerte Rₐ liegen hierbei in einem Bereich von 6 bis 25 µm, insbesondere in einem Bereich von 10 bis 15 µm.

Die gemittelte Rauhtiefe R_{z} bezeichnet den Mittelwert der Rauheitskenngröße von fünf Bezugsstrecken innerhalb einer Auswertelänge. Der arithmetische Mittenrauhwert Rₐ ist der arithmetische Mittelwert der absoluten Werte der Profilabweichungen innerhalb einer Bezugsstrecke.

Die Erfindung wird nachfolgend anhand von Ausführungsbeispielen näher erläutert, die in der Zeichnung dargestellt sind. Es zeigen:
- Fig. 1: eine perspektivische Darstellung eines scheibenförmigen Körpers nach der Erfindung,
- Fig. 2: einen Querschnitt durch ein Formwerkzeug zur Herstellung eines Körpers nach der Erfindung und
- Fig. 3: die Verwendung eines scheibenförmigen Körpers nach der Erfindung zur dichten Verbindung zweier Bauteile.

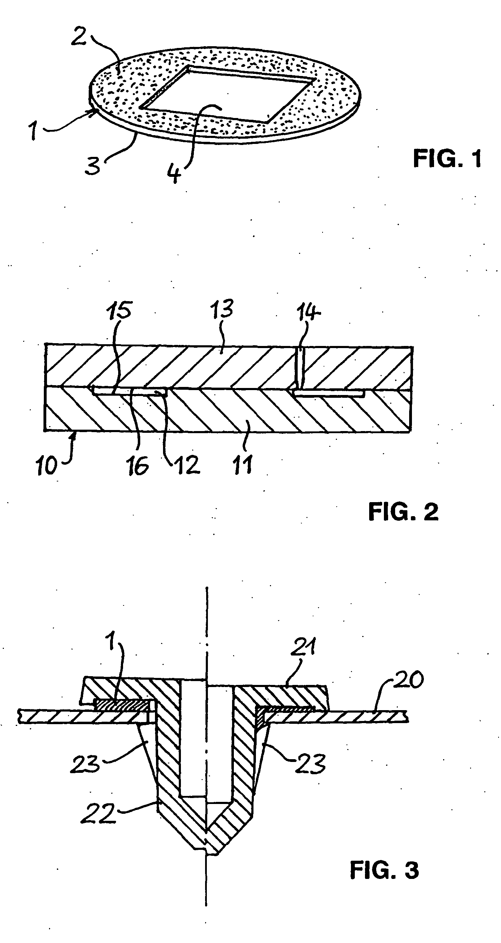

Der in Figur 1 gezeigte Körper 1 hat die Form einer kreisrunden Scheibe mit zwei parallelen Kreisflächen, die Auflageflächen 2, 3 bilden. Der Körper hat einen Durchmesser von etwa 15 mm und eine Dicke von etwa 1 mm. Im Zentrum des Körpers 1 befindet sich eine durchgehende, quadratische Öffnung 4. Die diagonale Abmessung der Öffnung 4 ist deutlich kleiner als der Außendurchmesser des Körpers 1.

Der Körper 1 besteht aus einem thermoplastischen Klebstoff, der durch Erwärmen in einen fließfähigen Zustand gebracht werden kann. Bei einer Temperatur von ca. 20° C ist das Material des Körpers 1 fest, jedoch nicht vollkommen starr, sondern elastisch verformbar. Ein derartiger Klebstoff aus Polyamid ist von der Firma Bostik Findley GmbH in 33829 Borghausen unter der Handelsbezeichnung "Thermelt" erhältlich. In Verbindung mit diesem bekannten Klebstoff traten die Vorteile der Erfindung besonders deutlich hervor.

Der Körper 1 ist zur Verwendung als Zwischenlage zwischen miteinander verbindbaren Bauteil bestimmt. Für eine solche Verwendung ist es notwendig, eine größere Anzahl von Körpern 1 herzustellen, welche dann gemeinsam in geeigneten Behältnissen, gewissermaßen als Schüttgut, zum Verwendungsort transportiert werden. Dort müssen die angelieferten Körper 1 dann einzeln einem Montagevorgang zugeführt werden. Damit das Vereinzeln leicht und schnell durchführbar ist und bei Bedarf auch mit Hilfe automatischer Einrichtungen erfolgen kann, sind die Auflageflächen 2, 3 der Körper 1 mit einer rauhen Oberflächenstruktur versehen. Hierbei hat es sich als besonders vorteilhaft erwiesen, wenn nach DIN 4768 die gemittelte Rauhtiefe R_{z} der Anlageflächen 2, 3 wenigstens 40 bis 100 µm, insbesondere etwa 60 µm beträgt. Der arithmetische Mittenrauhwert Rₐ sollte insbesondere im Bereich von 6 bis 25µm liegen, insbesondere etwa 12,5 µm betragen.

Durch die Rauheit der Anlagenflächen 2, 3 der einzelnen Körper 1 haben diese selbst bei einer gewissen Weichheit des thermoplastischen Kunststoffs keine Neigung, aneinander zu haften, so daß sie sich leicht trennen und vereinzeln lassen.

Die Herstellung des Körpers 1 aus thermoplastischem Klebstoff erfolgt nach dem sogenannten Spritzgießverfahren. Hierbei wird durch Erwärmen und Druck der plastifizierte Kunststoff in die formgebenden Ausnehmungen eines gekühlten Formwerkzeuges gespritzt. Nach einer Abkühlphase wird das Formwerkzeug geöffnet und der inzwischen fest gewordene Körper daraus entnommen.

In Figur 2 ist ein Formwerkzeug 10 im Schnitt dargestellt. Es besteht aus einer unteren Werkzeughälfte 11 mit einer der Form des Körpers 1 entsprechenden Ausnehmung 12 und einer oberen Werkzeughälfte 13, welche die Ausnehmung 12 verschließt. In der oberen Werkzeughälfte 13 ist ein Zuführkanal 14 für das Zuführen des plastifizierten Klebstoffes vorgesehen.

Um bereits bei der Herstellung des Körpers 1 die rauhe Beschaffenheit der Auflageflächen 2, 3 erzeugen zu können, sind die entsprechenden Formflächen 15, 16 der Werkzeughälften 11, 13 mit einer rauhen Oberfläche von entsprechender Rauhtiefe versehen. Die Rauheit der Oberflächen der aus einem hochfesten Stahl bestehenden Werkzeughälften 11, 13 kann vorteilhaft durch Funkenerosion erzeugt werden.

Die Rauheit der Formflächen 15, 16 des Formwerkzeuges 10 hat neben der Erzeugung rauher Anlageflächen 2, 3 den überraschenden Vorteil, daß nach dem Einspritzen des Klebstoffes in das Formwerkzeug 10 der Körper 1 während seiner Abkühlung in der ihm vorgegebenen Form gehalten wird und nicht dazu neigt, in unbestimmter Weise zu schwinden oder sich zu verziehen. Wenn nach einer definierten Abkühlphase die Abkühlung so weit fortgeschritten ist, daß der Körper 1 einen festen Zustand erreicht hat, ohne jedoch bereits vollständig abgekühlt zu sein, so wird das Formwerkzeug 10 durch Abnehmen der Werkzeughälfte 13 geöffnet. Das infolge der nach dem Öffnen des Formwerkzeuges noch fortschreitenden Abkühlung restliche Bestreben des Körpers 1, weiter zu schwinden, führt in Verbindung mit der Rauheit der einander berührenden Flächen von Körper 1 und Werkzeughälfte 11 dazu, daß sich der Körper 1 selbsttätig von der Werkzeughälfte 11 löst, so daß er leicht aus der Ausnehmung 12 des Formwerkzeuges 10 entnommen oder ausgeworfen werden kann.

Figur 3 zeigt eine bevorzugte Anwendung des scheibenförmigen Körpers 1. Bei dieser Anwendung wird der Körper 1, wie in der linken Hälfte der Darstellung von Figur 3 gezeigt, zwischen einem plattenförmigen Bauteil 20 und dem Flansch 21 eines in eine Öffnung des Bauteils 20, beispielsweise einem Karosserieblech, eingesetzten Befestigungselementes 22 montiert. Das Befestigungselement 22 weist federnde Sperrelemente 23 auf, die sich auf der dem Flansch 21 abgekehrten Seite der Unterlage 20 abstützen und das Befestigungselement 22 an den Körper 1 und das Bauteil 20 andrücken. Die auf diese Weise vormontierte Anordnung wird anschließend in einem Ofen so weit erwärmt, daß der thermoplastische Klebstoff, aus dem der Körper 1 besteht, fließfähig wird. In fließfähigem Zustand wird der Körper 1 durch die Anpreßkraft der Sperrelemente 23 zusammengedrückt, wie in der rechten Hälfte der Darstellung von Figur 3 gezeigt. Hierbei wird der Flansch 21 bis zur Anlage an das Bauteil 20 herangezogen, wobei das Material des Körpers 1 in den zwischen der Öffnung und dem Befestigungselement 22 vorhandenen Ringspalt fließt und diesen vollständig abdichtet. Durch die adhäsive Wirkung des thermoplastischen Klebstoffs des Körpers 1 wird zudem die Belastbarkeit der Verbindung zwischen Befestigungselement 22 und Bauteil 20 erhöht.

## Patentansprüche

1. Scheibenförmiger Körper aus thermoplastischem Kunststoff, insbesondere thermoplastischem Klebstoff, als Zwischenlage zum Abdichten oder Befestigen von Stopfen oder Befestigungselementen an einem Bauteil, wobei auf entgegengesetzten Seiten des Körpers Anlageflächen ausgebildet sind, **dadurch gekennzeichnet, daß** der scheibenförmige Körper im Spritzgießverfahren hergestellt ist und die Anlagenflächen eine gemittelte Rauhtiefe R_{z} nach DIN 4768 haben, die in einem Bereich von 40 bis 100 µm liegt.

2. Körper nach Anspruch 1, **dadurch gekennzeichnet, daß** die gemittelte Rauhtiefe R_{z} der Anlagenflächen im Bereich von 55 bis 70 µm liegt.

3. Körper nach Anspruch 1, **dadurch gekennzeichnet, daß** der arithmetische Mittenrauhwert Rₐ in einem Bereich von 6 bis 25 µm liegt.

4. Körper nach Anspruch 2, **dadurch gekennzeichnet, daß** der arithmetische Mittenrauhwert Rₐ in einem Bereich von 10 bis 15 µm liegt.

5. Verfahren zum Herstellen eines scheibenförmigen Körpers nach einem der vorhergehenden Ansprüche, wobei der Kunststoff in plastifiziertem Zustand mit Druck in ein gekühltes Formwerkzeug gespritzt und nach einer Abkühlphase aus diesem entnommen wird, **dadurch gekennzeichnet, daß** die Formflächen des Formwerkzeuges, welche die Anlageflächen des Körpers bilden, mit einer der Rauhtiefe der Anlageflächen entsprechenden Rauhtiefe beschaffen sind.

6. Verfahren nach Anspruch 5, **dadurch gekennzeichnet, daß** das Öffnen des Formwerkzeuges vor der vollständigen Abkühlung des darin befindlichen scheibenförmigen Körpers erfolgt.

## Claims

1. Disk-shaped object of synthetic thermoplastic material, in particular thermoplastic adhesive, as interlayer for sealing or attaching plugs or fastening elements to a part, contact surfaces being configured on opposed sides of the object, **characterised in that** the production of the disk-shaped object is performed by the injection molding process and that the contact surfaces have an averaged roughness depth R_{z} according to DIN 4768 that lies in a range from 40 to 100 µ.

2. Object according to claim 1, **characterised in that** the averaged roughness depth R_{z} of the contact surfaces lies in the range from 55 to 70 µ.

3. Object according to claim 1, **characterised in that** the arithmetic mean rugosity Rₐ lies in a range from 6 to 25 *µ*.

4. Object according to claim 2, **characterised in that** the arithmetic mean rugosity Rₐ lies in a range from 10 to 15 µ.

5. Method of producing a disk-shaped object according to any of the preceding claims, the synthetic material being injected under pressure in the plasticized state into a cooled molding tool and removed therefrom after a cooling phase, **characterised in that** the molding surfaces of the molding tool that form the contact surfaces of the object are textured with a roughness depth equivalent to that of the contact surfaces.

6. Method according to claim 5, **characterised in that** the opening of the molding tool takes place prior to the complete cooling of the disk-shaped object contained therein.

## Revendications

1. Corps ayant la forme d'un disque, en matière thermoplastique, en particulier en colle thermoplastique, à titre de couche intercalaire pour l'étanchement ou la fixation de bouchons ou d'éléments de fixation sur un composant, à des surfaces d'appui sont formées sur les faces opposées du disque, **caractérisé en ce que** le disque est fabriqué par un procédé de moulage par injection et **en ce que** les surfaces d'appui ont une profondeur de rugosité moyenne R_{z} selon DIN 4768 qui est comprise dans un intervalle de 40 à 100 µm.

2. Corps ayant la forme d'un disque selon la revendication 1, **caractérisé en ce que** la profondeur de rugosité moyenne R_{z} des surfaces d'appui est comprise dans l'intervalle de 55 à 70 µm.

3. Corps ayant la forme d'un disque selon la revendication 1, **caractérisé en ce que** la rugosité moyenne arithmétique Rₐ est comprise dans l'intervalle de 6 à 25 µm.

4. Corps ayant la forme d'un disque selon la revendication 2, **caractérisé en ce que** la rugosité moyenne arithmétique Rₐ est comprise dans l'intervalle de 10 à 15 µm.

5. Procédé de fabrication d'un corps ayant la forme d'un disque selon l'une des revendications précédentes, dans lequel le plastique est injecté sous pression à l'état plastifié dans un moule refroidi et est retiré de ce dernier après une phase de refroidissement, **caractérisé en ce que** les surfaces de moulage du moule, qui forment les surfaces d'appui du disque, sont constituées avec une rugosité correspondant à la rugosité des surfaces d'appui.

6. Procédé selon la revendication 5, **caractérisé en ce que** l'ouverture du moule s'effectue avant le refroidissement complet du disque se trouvant à l'intérieur.
